# EUROPEAN PATENT APPLICATION

(11) **EP 4 167 316 A1**
(43) Date of publication of application: **19.04.2023**
(21) Application number: 21821323.9
(22) Date of filing: 09.06.2021
(51) Int. Cl.: H01M 4/40, H01M 4/48, H01M 4/485, H01M 4/505, H01M 4/525, H01M 4/58, H01M 4/587, H01M 4/62, H01M 10/052, H01M 10/0562, H01B 1/06, H01B 1/08

(54) **SOLID ELECTROLYTE MATERIAL, SOLID ELECTROLYTE, PRODUCTION METHODS THEREFOR, AND ALL-SOLID-STATE BATTERY**

(30) Priority: 10.06.2020 JP 2020100587
(71) Applicant: Showa Denko K.K., Tokyo 105-8518 (JP)
(72) Inventor: SEI, Ryosuke, Tokyo 105-8518 (JP); LEE, Kunchan, Tokyo 105-8518 (JP); INAGUMA, Yoshiyuki, Tokyo 171-8588 (JP)
(74) Representative: Strehl Schübel-Hopf & Partner
(86) International application number: PCT/JP2021/021831
(87) International publication number: WO 2021/251405

(57) **Abstract**

One embodiment of the present invention relates to a solid electrolyte material, a solid electrolyte, a method for producing these, and an all-solid-state battery, and the solid electrolyte material includes a lithium ion conductive compound (a) including lithium, tantalum, phosphorus, and oxygen as constituent elements, and at least one compound (b) selected from a boron compound, a bismuth compound, and a phosphorus compound [wherein the compound (b) is a compound different from the compound (a)].

## Description

### Technical Field

One embodiment of the present invention relates to a solid electrolyte material, a solid electrolyte, a method for producing these, or an all-solid-state battery.

### Background Art

In recent years, there has been a demand for the development of a high output and high capacity battery as a power source for, for example, a notebook computer, a tablet terminal, a cellphone, a smartphone or an electric vehicle (EV). Among these, an all-solid-state battery using a solid electrolyte instead of a liquid electrolyte such as an organic solvent has attracted attention as a battery having excellent charge/discharge efficiency, charging speed, safety, and productivity.

As the solid electrolyte, an inorganic solid electrolyte has attracted attention, and as the inorganic solid electrolyte, oxide and sulfide solid electrolytes are mainly known.

When a sulfide solid electrolyte is used, there are advantages such as being able to manufacture a battery by, for example, cold pressing, but it is unstable to humidity and harmful hydrogen sulfide gas may be generated, and thus from the viewpoint of, for example, safety, the development of an oxide solid electrolyte is underway.

Non Patent Literature 1 discloses that as such an oxide solid electrolyte, LiTa₂PO₈, which has a monoclinic crystal structure, exhibits a high lithium ion conductivity (total conductivity (25°C) : 2.5 × 10⁻⁴ S·cm⁻¹).

### Citation List

### Non Patent Literature

Non Patent Literature 1: J. Kim et al., J. Mater. Chem. A, 2018, 6, p22478-22482

### Summary of Invention

### Technical Problem

An oxide solid electrolyte has an extremely high grain boundary resistance, and in order to obtain an ion conductivity that allows use thereof in an all-solid-state battery, a powder of the solid electrolyte needs to be not only compression molded, but also formed into a high density sintered body. Then, in order to obtain such a high density sintered body, the solid electrolyte needs to be fired at a high temperature of, for example, about 1100°C.

In addition, when manufacturing an all-solid-state battery using an oxide solid electrolyte, in order to obtain a high ion conductivity, the solid electrolyte needs to be sintered together with, for example, a positive electrode material and a negative electrode material.

When firing the same, it is desired to obtain a sintered body having a high ion conductivity even when firing at a low temperature (e.g., 900°C or less) in order to suppress, for example, decomposition, and alteration in quality of another material such as a positive electrode or negative electrode material in terms of economic efficiency and equipment, but when LiTa₂PO₈ disclosed in Non Patent Literature 1 is fired at a low temperature, it is not possible to obtain a sintered body exhibiting a sufficient ion conductivity.

One embodiment of the present invention provides a solid electrolyte material that can allow a sintered body having a sufficient ion conductivity to be obtained even when fired at a low temperature (e.g., 900°C or less).

### Solution to Problem

The present inventors have carried out diligent studies and as a result, have found that the above problem can be solved according to the following configuration examples, and have completed the present invention.

The configuration examples of the present invention are as follows.
[1] A solid electrolyte material comprising:
   a lithium ion conductive compound (a) comprising lithium, tantalum, phosphorus, and oxygen as constituent elements; and
   at least one compound (b) selected from a boron compound, a bismuth compound, and a phosphorus compound [wherein the compound (b) is a compound different from the compound (a)].
[2] The solid electrolyte material according to [1], wherein the solid electrolyte material is amorphous.
[3] The solid electrolyte material according to [1], wherein the compound (a) has a monoclinic structure.
[4] The solid electrolyte material according to any of [1] to [3], wherein
   the compound (a) is
   a compound represented by a composition formula Li[₁₊₍₅₋ₐ₎ₓ]Ta₂-ₓM1ₓPO₈ [where M1 is one or more elements selected from the group consisting of Nb, Zr, Ga, Sn, Hf, W, and Mo, 0.0 ≤ x < 1.0, and a is an average valence of M1], or
   a compound represented by a composition formula Li[_{1+(5-b)y}]Ta₂P_{1-y}M2_{y}O₈ [where M2 is one or more elements selected from the group consisting of Si, Al, and Ge, and 0.0 ≤ y < 0.7, and b is an average valence of M2].
[5] The solid electrolyte material according to any of [1] to [4], wherein the compound (b) is a compound comprising lithium or hydrogen as a constituent element.
[6] The solid electrolyte material according to any of [1] to [5], wherein a content of the tantalum element is 10.6 to 16.6 atomic %.
[7] The solid electrolyte material according to any of [1] to [6], wherein a content of the phosphorus element is 5.3 to 8.3 atomic %.
[8] The solid electrolyte material according to any of [1] to [7], wherein a content of the lithium element is 5.0 to 20.0 atomic %.
[9] The solid electrolyte material according to any of [1] to [8], wherein the boron compound is at least one compound selected from the group consisting of LiBO₂, LiB₃O₅, Li₂B₄O₇, Li₃B₁₁O₁₈, Li₃BO₃, Li₃B₇O₁₂, Li_{3.6}B₂O_{4.8}, Li_{3.2}B₂O_{4.6}, Li₄B₂O₅, Li₆B₄O₉, Li₃₋ₓ₅B₁₋ₓ₅Cₓ₅O₃ (0 < x5 < 1), Li₄₋ₓ₆B₂₋ₓ₆Cₓ₆O₅ (0 < x6 < 2), Li_{2.4}Al_{0.2}BO₃, Li_{2.7}Al_{0.1}BO₃, B₂O₃, and H₃BO₃.
[10] The solid electrolyte material according to any of [1] to [9], wherein the bismuth compound is at least one compound selected from the group consisting of LiBiO₂, Li₃BiO₃, Li₄Bi₂O₅, Li_{2.4}Al_{0.2}BiO₃, and Bi₂O₃.
[11] The solid electrolyte material according to any of [1] to [10], wherein the phosphorus compound is at least one compound selected from the group consisting of LiPO₃ and Li₃PO₄
[12] The solid electrolyte material according to any of [1] to [11], wherein a content of the compound (b) is 1 to 40 mol% per 100 mol% in total of the compounds (a) and (b).
[13] A method for producing the solid electrolyte material according to any of [1] to [12], comprising a step of pulverizing and mixing the compound (a) and the compound (b) .
[14] A solid electrolyte obtained by using the solid electrolyte material according to any of [1] to [12].
[15] A solid electrolyte which is a sintered body of the solid electrolyte material according to any of [1] to [12].
[16] A method for producing the solid electrolyte according to [14] or [15], comprising a step of firing the solid electrolyte material according to any of [1] to [12] at 500 to 900°C.
[17] A method for producing a solid electrolyte, comprising:
   a step 1 of pulverizing and mixing a lithium ion conductive compound (a) comprising lithium, tantalum, phosphorus, and oxygen as constituent elements, and at least one compound (b) selected from a boron compound, a bismuth compound, and a phosphorus compound [wherein the compound (b) is a compound different from the compound (a)], to manufacture an amorphous solid electrolyte material; and
   a step 2 of firing the solid electrolyte material obtained in the step 1.
[18] An all-solid-state battery, comprising:
   a positive electrode having a positive electrode active material;
   a negative electrode having a negative electrode active material; and
   a solid electrolyte layer between the positive electrode and the negative electrode, wherein
   the solid electrolyte layer comprises the solid electrolyte according to [14] or [15].
[19] The all-solid-state battery according to [18], wherein the positive electrode active material comprises one or more compounds selected from the group consisting of LiM3PO₄ [where M3 is one or more elements selected from the group consisting of Mn, Co, Ni, Fe, Al, Ti, and V, or two elements V and OJ, LiM5VO₄ [where M5 is one or more elements selected from the group consisting of Fe, Mn, Co, Ni, Al, and Ti, Li₂M6P₂O₇ [where M6 is one or more elements selected from the group consisting of Fe, Mn, Co, Ni, Al, Ti, and V, or two elements V and O], LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₄)₃ [where 0 ≤ x8 ≤ 0.8, and M8 is one or more elements selected from the group consisting of Ti and Ge], LiNi_{1/3}Co_{1/3}Mn_{1/3}O₂, LiCoO₂, LiNiO₂, LiMn₂O₄, Li₂CoP₂O₇, Li₃V₂ (PO₄)₃, Li₃Fe₂(PO₄)₃, LiNi_{0.5}Mn_{1.5}O₄, and Li₄Ti₅O₁₂.
[20] The all-solid-state battery according to [18] or [19], wherein the negative electrode active material comprises one or more compounds selected from the group consisting of LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti], Li₂M6P₂O₇ [where M6 is one or more elements selected from the group consisting of Fe, Mn, Co, Ni, Al, Ti, and V, or two elements V and O, LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈ (PO₄)₃ [where 0 ≤ x8 ≤ 0.8, and M8 is one or more elements selected from the group consisting of Ti and Ge], (Li_{3-a9x9+(5-b9)y9}M9ₓ₉)(V_{1-y9}M10_{y9})O₄ [where M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10], LiNb₂O₇, Li₄Ti₅O₁₂, Li₄Ti₅PO₁₂, TiO₂, LiSi, and graphite.
[21] The all-solid-state battery according to any of [18] to [20], wherein the positive electrode and the negative electrode comprise the solid electrolyte according to [14] or [15] .

### Advantageous Effects of Invention

According to one embodiment of the present invention, it is possible to obtain a sintered body having a sufficient ion conductivity, particularly a sufficient lithium ion conductivity, even when firing at a low temperature (e.g., 900°C or less). Therefore, by using the solid electrolyte material according to one embodiment of the present invention, it is possible to easily manufacture an all-solid-state battery including a solid electrolyte having a sufficient ion conductivity while having excellent economic efficiency and suppressing, for example, decomposition, and alteration in quality of another material such as a positive electrode or negative electrode material.

### Brief Description of Drawings

[Figure 1] Figure 1 shows an XRD pattern of LiTa₂PO₈ synthesized in Synthesis Example 1.
[Figure 2] Figure 2 shows an XRD pattern of Si-containing LTPO synthesized in Synthesis Example 2.
[Figure 3] Figure 3 shows an XRD pattern of Nb-containing LTPO synthesized in Synthesis Example 3.
[Figure 4] Figure 4 shows an XRD pattern of the solid electrolyte material manufactured in Example 1.

### Description of Embodiments

### <<Solid electrolyte material>>

The solid electrolyte material according to one embodiment of the present invention (hereinafter, also referred to as "the present material") includes a lithium ion conductive compound (a) including lithium, tantalum, phosphorus, and oxygen as constituent elements, and at least one compound (b) selected from a boron compound, a bismuth compound, and a phosphorus compound [wherein the compound (b) is a compound different from the compound (a)].

The present material is not particularly limited as long as the present material includes the compound (a) and the compound (b), can be produced, for example, by a method including a step of mixing the compound (a) and the compound (b), and is preferably produced by a method including a step of pulverizing and mixing the compound (a) and the compound (b) from the viewpoint of, for example, being able to easily obtain a solid electrolyte having a higher ion conductivity when a solid electrolyte is obtained from the present material.

It may not always be clear that the present material obtained by pulverizing and mixing the compound (a) and the compound (b) includes the compound (a) and the compound (b), and even in this case, the present material obtained by pulverizing and mixing the compound (a) and the compound (b) is deemed to include the compound (a) and the compound (b).

The present material, particularly the present material obtained by the pulverizing and mixing, is preferably amorphous. For example, if no peak is observed (a broad peak is observed) in an X-ray diffraction (XRD) pattern, it can be determined that the present material is amorphous.

When the present material is amorphous, the solid electrolyte obtained from the present material, particularly the solid electrolyte (sintered body) obtained by firing the present material, tends to exhibit a higher ion conductivity.

For example the shape, and size of the present material are not particularly limited, and the present material is preferably in the form of a particle (powder), and the average particle size (D50) of the present material, particularly the present material obtained by the pulverizing and mixing, is preferably 0.1 to 10 µm and more preferably 0.1 to 5 µm.

When the average particle size of the present material is in the above range, the solid electrolyte obtained from the present material, particularly the solid electrolyte (sintered body) obtained by firing the present material, tends to exhibit a higher ion conductivity.

The content of the lithium element in the present material is preferably 5.0 to 20.0 atomic % and more preferably 9.0 to 15.0 atomic %, from the viewpoint of, for example, being able to easily obtain a solid electrolyte having a higher lithium ion conductivity.

The content of the lithium element in the present material includes both the lithium element derived from the compound (a), and when a compound including the lithium element is used as the compound (b), the lithium element derived from the compound (b). The same also applies to the content of another element in the present material.

The content of each element in the present material can be measured, for example, by the absolute intensity quantification method of Auger electron spectroscopy (AES) using a standard powder sample containing Mn, Co, and Ni in a proportion of 1:1:1 as a lithium-containing transition metal oxide such as LiCoO₂. In addition thereto, the content thereof can be determined by a conventionally known quantitative analysis. For example, the content of each element in the present material can be determined using a high frequency inductively coupled plasma (ICP) emission spectrometer after adding an acid to a sample for thermal decomposition and then adjusting the volume of the thermal decomposition product.

The content of the phosphorus element in the present material is preferably 5.3 to 8.3 atomic % and more preferably 5.8 to 8.0 atomic %, from the viewpoint of, for example, being able to easily obtain a solid electrolyte having a higher lithium ion conductivity.

The content of the tantalum element in the present material is preferably 10.6 to 16.6 atomic % and more preferably 11.0 to 16.0 atomic %, from the viewpoint of, for example, being able to easily obtain a solid electrolyte having a higher lithium ion conductivity.

When the present material includes the boron element, the content of the boron element in the present material is preferably 0.1 to 5.0 atomic % and more preferably 0.5 to 3.0 atomic %, from the viewpoint of, for example, being able to further lower the firing temperature when obtaining a sintered body having a sufficient ion conductivity.

When the present material includes the bismuth element, the content of the bismuth element in the present material is preferably 0.1 to 5.0 atomic % and more preferably 0.1 to 2.0 atomic %, from the viewpoint of, for example, being able to further lower the firing temperature when obtaining a sintered body having a sufficient ion conductivity.

The present material may include the metal element M1 [one or more elements selected from the group consisting of Nb, Zr, Ga, Sn, Hf, W, and Mo], and in this case, the content of the M1 element in the present material is preferably 0.1 to 5.0 atomic % and more preferably 0.5 to 3.0 atomic %, from the viewpoint of, for example, being able to easily obtain a solid electrolyte having a higher lithium ion conductivity.

The present material may include the metal element M2 [one or more elements selected from the group consisting of Si, Al, and Ge], and in this case, the content of the M2 element in the present material is preferably 0.1 to 5.0 atomic % and more preferably 0.5 to 3.0 atomic %, from the viewpoint of, for example, being able to easily obtain a solid electrolyte having a higher lithium ion conductivity.

### <Compound (a)>

The compound (a) is a lithium ion conductive compound including lithium, tantalum, phosphorus, and oxygen as constituent elements, and is preferably an oxide including these elements.

As the compound (a) included in the present material, one may be used, or two or more may be used.

The compound (a) before the pulverizing and mixing is preferably a compound having a monoclinic structure. Whether the compound (a) has a monoclinic structure can be determined, for example, by Rietveld analysis of an X-ray diffraction (XRD) pattern of the compound (a), specifically by the method of the following Examples.

When the compound (a) is a compound having a monoclinic structure rather than a garnet type, perovskite type, or LISICON type structure, a sintered body having sufficient ion conductivity can be obtained by using the compound (a) together with the compound (b), even when firing at a low temperature (e.g., 900°C or less).

The monoclinic structure as used herein may include an orthorhombic crystal having a β angle of 90°. For example, LiTa₂PO₈ having a monoclinic structure has lattice constants a, b, and c of 9.712 Å, 11.532 Å, and 10.695 Å, respectively, having a β angle of 90.03°, and having a theoretical density of 5.85 (g/cm³).

The monoclinic ratio (= crystal quantity of monoclinic crystal × 100/total crystal quantity of confirmed crystals) of the compound (a) is preferably 70% or more, more preferably 80% or more, and further preferably 90% or more, and the upper limit thereof is not particularly limited and is 100%.

By using the compound (a) having a monoclinic ratio in the above range, it tends to be possible to easily obtain a solid electrolyte having a high ion conductivity both within a crystal grain and at a crystal grain boundary.

The monoclinic ratio can be determined by Rietveld analysis of an X-ray diffraction (XRD) pattern, specifically by the method of the following Examples.

Specific examples of the compound (a) include a compound (a1) that includes lithium, tantalum, phosphorus, and oxygen as constituent elements, and may further include one or more metal elements M1 selected from the group consisting of Nb, Zr, Ga, Sn, Hf, W, and Mo, and a compound (a2) that includes lithium, tantalum, phosphorus, and oxygen as constituent elements, and may further include one or more metal elements M2 selected from the group consisting of Si, Al, and Ge. Among these, the compound (a) is preferably a compound consisting only of lithium, tantalum, phosphorus, and oxygen as constituent elements, and more preferably LiTa₂PO₈, from the viewpoint of, for example, exerting the advantageous effects of the present invention more.

### • Compound (a1)

The compound (a1) is preferably LiTa₂PO₈ or a compound obtained by replacing a part of Ta of LiTa₂PO₈ with the metal element(s) M1, and preferably has a monoclinic structure.

The compound (a1) is specifically preferably a compound represented by the composition formula Li[₁₊₍₅₋ₐ₎ₓ]Ta₂₋ₓM1ₓPO₈ [where M1 is one or more elements selected from the group consisting of Nb, Zr, Ga, Sn, Hf, W, and Mo, 0.0 ≤ x < 1.0, and a is an average valence of M1].

Nb, W, and Mo are more preferable, Nb and W are further preferable, and Nb is particularly preferable as M1, from the viewpoint of, for example, increasing the lithium ion conductivity at a crystal grain boundary in the solid electrolyte obtained by using the compound (a).

The x is preferably 0.95 or less, more preferably 0.90 or less, further preferably 0.85 or less, more preferably 0.80 or less, and particularly preferably 0.75 or less.

When x is in the above range, the lithium ion conductivity at a crystal grain boundary tends to be high in the solid electrolyte obtained by using the compound (a).

The content of M1 can be determined by a conventionally known quantitative analysis as a percentage of the number of atoms of M1 to the total number of atoms of tantalum and M1. For example, the content thereof can be determined using a high frequency inductively coupled plasma (ICP) emission spectrometer after adding an acid to the compound (a) for thermal decomposition and then adjusting the volume of the thermal decomposition product. In the method for producing the compound (a) described later, basically tantalum and M1 do not flow out of the system, and thus the percentage of the number of atoms of M1 to the total number of atoms of tantalum and M1 can be simply calculated from the amounts of the raw materials supplied.

Depending on the valence and content of M1, the amount of Li varies according to the average valence of M1 such that the charge neutrality of the compound (a) described above can be obtained. The average valence of M1 represented by the a can be determined as follows.

When M1 is composed of two or more elements, the a is calculated by weighted averaging using the valence of each element and the content of each element. For example, when M1 includes 80 atomic % Nb and 20 atomic % Zr, a is calculated as (+5 × 0.8) + (+4 × 0.2) = +4.8. In addition, when M1 is composed of 80 atomic % Nb and 20 atomic % W, a is calculated as (+5 × 0.8) + (+6 × 0.2) = +5.2.

### • Compound (a2)

The compound (a2) is preferably LiTa₂PO₈ or a compound obtained by replacing a part of P of LiTa₂PO₈ with the metal element(s) M2, and preferably has a monoclinic structure.

The compound (a2) is specifically preferably a compound represented by the composition formula Li[_{1+(5-b)y}]Ta₂P_{1-y}M2_{y}O₈ [where M2 is one or more elements selected from the group consisting of Si, Al, and Ge, 0.0 ≤ y < 0.7, and b is an average valence of M2].

Si and Al are more preferable, and Si is further preferable as M2, from the viewpoint of, for example, increasing the lithium ion conductivity at a crystal grain boundary in the solid electrolyte obtained by using the compound (a).

The y is preferably 0.65 or less, more preferably 0.60 or less, and further preferably 0.55 or less.

When y is in the above range, the total ion conductivity, which is the sum of the lithium ion conductivity within a crystal grain and the lithium ion conductivity at a crystal grain boundary, tends to be high in the solid electrolyte obtained by using the compound (a).

The content of M2 can be determined by a conventionally known quantitative analysis as a percentage of the number of atoms of M2 to the total number of atoms of phosphorus and M2. For example, the content thereof can be determined using a high frequency inductively coupled plasma (ICP) emission spectrometer after adding an acid to the compound (a) for thermal decomposition and then adjusting the volume of the thermal decomposition product. In the method for producing the compound (a) described later, phosphorus and M2 do not flow out of the system, and thus the percentage of the number of atoms of M2 to the total number of atoms of phosphorus and M2 can be simply calculated from the amounts of the raw materials supplied.

The average valence represented by the b can be determined in the same manner as in the method for calculating the average valence a described above.

### [Method for producing compound (a)]

The method for producing the compound (a) is not particularly limited, and for example, a conventionally known production method such as a solid phase reaction or a liquid phase reaction can be adopted. Specific examples of the method for producing the compound (a) include a method including at least a mixing step and a firing step each in one stage.

### • Mixing step

Examples of the mixing step include a step of mixing a compound including a lithium atom, a compound including a tantalum atom, a compound including a phosphorus atom, and, if necessary, a compound including the metal element M1 and/or a compound including the metal element M2, which are raw materials.

The compound including a lithium atom is not particularly limited, and an inorganic compound is preferable from the viewpoint of ease of handling, and examples of the inorganic compound including a lithium atom include lithium carbonate (Li₂CO₃), lithium oxide (Li₂O), lithium hydroxide (LiOH), lithium acetate (LiCH₃COO), and hydrates thereof. Among these, lithium carbonate is preferable in that this is easily decomposed and reacted.

As the compound including a lithium atom, one may be used, or two or more may be used.

The compound including a tantalum atom is not particularly limited, and an inorganic compound is preferable from the viewpoint of ease of handling, and examples of the inorganic compound including a tantalum atom include tantalum pentoxide (Ta₂O₅) and tantalum nitrate (Ta(NO₃)₅). Among these, tantalum pentoxide is preferable from the viewpoint of cost.

As the compound including a tantalum atom, one may be used, or two or more may be used.

The compound including a phosphorus atom is not particularly limited, a phosphate is preferable, and examples of the phosphate include diammonium hydrogen phosphate ((NH₄)₂HPO₄) and monoammonium dihydrogen phosphate (NH₄H₂PO₄) in that these are easily decomposed and reacted.

As the compound including a phosphorus atom, one may be used, or two or more may be used.

The compound including the metal element M1 is not particularly limited, and an inorganic compound is preferable from the viewpoint of ease of handling, and examples thereof include an oxide and a nitrate of M1. Among these, an oxide is preferable from the viewpoint of cost.

As the compound including the metal element M1, one may be used, or two or more may be used.

When M1 is Nb, Ga, or Sn, examples of the oxide thereof include niobium pentoxide (Nb₂O₅), gallium oxide (Ga₂O₃), and tin oxide (SnO₂), respectively.

When M1 is Zr, Hf, W, or Mo, examples of the oxide thereof include zirconium oxide (ZrO₂), hafnium oxide (HfO₂), tungsten oxide (WO₃), and molybdenum oxide (MoO₃), respectively. When M1 is Zr, Hf, W, or Mo, in addition to the oxide thereof, zirconium hydroxide (Zr(OH)₄), hafnium hydroxide (Hf(OH)₄), tungstic acid (H₂WO₄), and molybdic acid (H₂MoO₄) can also be used from the viewpoint of ease of reaction.

The compound including the metal element M2 is not particularly limited, and an inorganic compound is preferable from the viewpoint of ease of handling, and examples thereof include a simple substance and an oxide of M2. Among these, an oxide is preferable from the viewpoint of ease of handling.

As the compound including the metal element M2, one may be used, or two or more may be used.

When M2 is Si, Ge, or Al, examples of the oxide thereof include silicon oxide (SiO₂), germanium oxide (GeO₂), and aluminum oxide (Al₂O₃), respectively.

Examples of the method for mixing the raw materials include a mixing method using, for example, a roll tumbling mill, a ball mill, a small diameter ball mill (bead mill), a medium stirring mill, an air flow pulverizer, a mortar, an automatic kneading mortar, a tank crusher, or a jet mill.

For the mixing ratio of the raw materials, these may be mixed, for example, at a stoichiometric ratio so as to obtain a desired composition of the compound (a).

In the firing step described later, a lithium atom is likely to flow out of the system, and thus the compound including a lithium atom may be excessively used by about 10 to 20%. In addition, in the firing step described later, in order to suppress the generation of a by-product, the compound including a phosphorus atom may be excessively used by about 1 to 10%.

In the mixing, the mixing may be carried out while carrying out heating if necessary, and the mixing is usually carried out at room temperature.

In addition, the mixing may be carried out in the atmosphere, and is preferably carried out in an atmosphere of nitrogen gas and/or argon gas in which the oxygen gas content is adjusted in the range of 0 to 20% by volume.

### • Firing step

In the firing step, the mixture obtained in the mixing step is fired. When the firing step is carried out a plurality of times, a pulverization step using, for example, a ball mill, or a mortar may be provided for the purpose of pulverizing or reducing the particle size of the fired product obtained in the firing step. In particular, the compound (a) has a low reaction rate of phase formation, and thus a reaction intermediate may be present in the first firing. In this case, it is preferable to carry out the first firing, carry out the pulverization step, and then further carry out the firing step.

The firing step may be carried out in the atmosphere, and is preferably carried out in an atmosphere of nitrogen gas and/or argon gas in which the oxygen gas content is adjusted in the range of 0 to 20% by volume.

The firing temperature depends on the firing time, and is preferably 800 to 1200°C, more preferably 950 to 1100°C, and further preferably 950 to 1000°C.

When the firing temperature is in the above range, a lithium atom is less likely to flow out of the system, and the compound (a) having a high ion conductivity tends to be easily obtained.

The firing time (the total firing time when the firing step is carried out several times) depends on the firing temperature, and is preferably 1 to 16 hours and more preferably 3 to 12 hours.

When the firing time is in the above range, a lithium atom is less likely to flow out of the system, and a compound (a) having a high ion conductivity tends to be easily obtained.

The firing step may be, for example, a two-stage step of low temperature firing and high temperature firing.

In this case, examples of the low temperature firing include firing at 400 to 800°C for 2 to 12 hours.

In addition, in order to suppress a residual by-product, high temperature firing may be carried out twice. The firing temperature in the second firing step is preferably 800 to 1200°C, more preferably 950 to 1100°C, and further preferably 950 to 1000°C.

The firing time in each firing step is preferably 1 to 8 hours and more preferably 2 to 6 hours.

If the fired product obtained after the firing step is left in the atmosphere, the fired product may absorb moisture or react with carbon dioxide to alter in quality. Because of this, the fired product obtained after the firing step is preferably transferred into a dehumidified inert gas atmosphere and stored when the temperature thereof drops to 200°C or less in temperature lowering after the firing step.

### <Compound (b)>

The compound (b) is at least one compound selected from a boron compound, a bismuth compound, and a phosphorus compound. Among these, a boron compound is preferable from the viewpoint of, for example, exerting the advantageous effects of the present invention more.

The compound (b) is a compound different from the compound (a).

As the compound (b) included in the present material, one may be used, or two or more may be used.

From the viewpoint of ease of handling, the compound (b) is preferably an inorganic compound, more preferably a compound including lithium or hydrogen as a constituent element, and further preferably a complex oxide including lithium as a constituent element.

The compound (b) may be produced and obtained by a conventionally known method, or a commercially available product may be used as the compound (b).

The compound (b) before the pulverizing and mixing is preferably a crystalline compound. Whether the compound (b) is a crystalline compound can be determined, for example, from an X-ray diffraction (XRD) pattern of the compound (b).

Examples of the boron compound include LiBO₂, LiB₃O₅, Li₂B₄O₇, Li₃B₁₁O₁₈, Li₃BO₃, Li₃B₇O₁₂, Li_{3.6}B₂O_{4.8}, Li_{3.2}B₂O_{4.6}, Li₄B₂O₅, Li₆B₄O₉, Li₃₋ₓ₅B₁₋ₓ₅Cₓ₅O₃ (0 < x5 <1), Li₄₋ₓ₆B₂₋ₓ₆Cₓ₆O₅ (0 < x6 <2), Li_{2.4}Al_{0.2}BO₃, Li_{2.7}Al_{0.1}BO₃, B₂O₃, and H₃BO₃. Among these, Li₃BO₃, Li_{3.6}B₂O_{4.8}, Li_{3.2}B₂O_{4.6}, Li₄B₂O₅, LiBO₂, and LiB₃O₅ are preferable, and Li₃BO₃ and Li₄B₂O₅ are more preferable, from the viewpoint of, for example, being able to further lower the firing temperature when obtaining a sintered body having a sufficient ion conductivity.

Examples of the bismuth compound include LiBiO₂, Li₃BiO₃, Li₄Bi₂O₅, Li_{2.4}Al_{0.2}BiO₃, and Bi₂O₃. Among these, LiBiO₂ and Li₃BiO₃ are preferable, and LiBiO₂ is more preferable, from the viewpoint of, for example, being able to further lower the firing temperature when obtaining a sintered body having a sufficient ion conductivity.

Examples of the phosphorus compound include LiPO₃ and Li₃PO₄. Among these, LiPO₃ is preferable from the viewpoint of, for example, being able to further lower the firing temperature when obtaining a sintered body having a sufficient ion conductivity.

### [Method for producing compound (b)]

The method for producing the compound (b) is not particularly limited, and for example, a conventionally known production method such as a solid phase reaction or a liquid phase reaction can be adopted. Specific examples of the method for producing the compound (b) include a method including a mixing step and a firing step.

A commercially available product may be used as the compound (b).

### • Mixing step

In the mixing step, for example, when producing a complex oxide including lithium as a constituent element, a compound including a lithium atom and a compound including a boron atom, a compound including a bismuth atom, or a compound including a phosphorus atom, which are raw materials, are mixed.

Depending on the type of the compound (b), this mixing step may not be carried out.

The compound including a lithium atom is not particularly limited, and an inorganic compound is preferable from the viewpoint of ease of handling, and examples of the inorganic compound including a lithium atom include lithium carbonate (Li₂CO₃), lithium oxide (Li₂O), lithium hydroxide (LiOH), lithium acetate (LiCH₃COO), and hydrates thereof. Among these, lithium carbonate is preferable in that this is easily decomposed and reacted. In addition, it is also preferable to use lithium hydroxide monohydrate (LiOH•H₂O).

As the compound including a lithium atom, one may be used, or two or more may be used.

The compound including a boron atom is not particularly limited, and an inorganic compound is preferable from the viewpoint of ease of handling, and examples of the inorganic compound including a boron atom include boric acid (H₃BO₃) and boron oxide (B₂O₃). Among these, boric acid is preferable.

As the compound including a boron atom, one may be used, or two or more may be used.

The compound including a bismuth atom is not particularly limited, and an inorganic compound is preferable from the viewpoint of ease of handling, and examples of the inorganic compound including a bismuth atom include bismuth oxide and bismuth nitrate (Bi(NO₃)₃). Among these, bismuth oxide is preferable.

As the compound including a bismuth atom, one may be used, or two or more may be used.

The compound including a phosphorus atom is not particularly limited, a phosphate is preferable, and examples of the phosphate include diammonium hydrogen phosphate ((NH₄)₂HPO₄) and monoammonium dihydrogen phosphate (NH₄H₂PO₄) in that these are easily decomposed and reacted.

As the compound including a phosphorus atom, one may be used, or two or more may be used.

Examples of the method for mixing the raw materials include a mixing method using, for example, a roll tumbling mill, a ball mill, a small diameter ball mill (bead mill), a medium stirring mill, an air flow pulverizer, a mortar, an automatic kneading mortar, a tank crusher, or a jet mill.

For the mixing ratio of the raw materials, these may be mixed, for example, at a stoichiometric ratio so as to obtain a desired composition of the compound (b).

In the firing step described later, a lithium atom is likely to flow out of the system, and thus the compound including a lithium atom may be excessively used by about 10 to 20%. In addition, in the firing step described later, in order to suppress the generation of a by-product, when the compound including a phosphorus atom is used, this compound may be excessively used by about 1 to 10%.

In the mixing, the mixing may be carried out while carrying out heating if necessary, and the mixing is usually carried out at room temperature.

In addition, the mixing may be carried out in the atmosphere, and is preferably carried out in an atmosphere of nitrogen gas and/or argon gas in which the oxygen gas content is adjusted in the range of 0 to 20% by volume.

### • Firing step

In the firing step, the mixture obtained in the mixing step is fired. When the firing step is carried out a plurality of times, a pulverization step using, for example, a ball mill, or a mortar may be provided for the purpose of pulverizing or reducing the particle size of the fired product obtained in the firing step.

The firing step may be carried out in the atmosphere, and is preferably carried out in an atmosphere of nitrogen gas and/or argon gas in which the oxygen gas content is adjusted in the range of 0 to 20% by volume.

The firing temperature depends on the firing time, and is preferably 400 to 1000°C and more preferably 500 to 900°C.

When the firing temperature is in the above range, a lithium atom is less likely to flow out of the system, and the desired compound (b) tends to be easily obtained.

The firing time (the total firing time when the firing step is carried out several times) depends on the firing temperature, and is preferably 1 to 48 hours and more preferably 3 to 24 hours.

When the firing time is in the above range, a lithium atom is less likely to flow out of the system, and the desired compound (b) tends to be easily obtained.

If the fired product obtained after the firing step is left in the atmosphere, the fired product may absorb moisture or react with carbon dioxide to alter in quality. Because of this, the fired product obtained after the firing step is preferably transferred into a dehumidified inert gas atmosphere and stored when the temperature thereof drops to 200°C or less in temperature lowering after the firing step.

The content of the compound (b) in the present material is preferably 1 to 40 mol%, more preferably 3 to 30 mol%, and further preferably 5 to 20 mol%, per 100 mol% in total of the compounds (a) and (b) from the viewpoint of, for example, being able to further lower the firing temperature when obtaining a sintered body having a sufficient ion conductivity.

### <Other components>

The present material is not particularly limited as long as the present material includes the compound (a) and the compound (b), and may include other components other than the compounds (a) and (b). Examples of the other components include a conventionally known material used for a solid electrolyte of an all-solid-state battery, and examples thereof include a lithium ion conductive compound other than the compound (a), a sintering aid other than the compound (b), and aluminum oxide (Al₂O₃).

As each of the other components, one may be used, or two or more may be used.

The content of the other components in the present material is preferably 40 mol% or less and more preferably 30 mol% or less, per 100 mol% in total of the compounds (a) and (b), and the present material preferably does not include the other components.

### <Method for producing the present material>

The present material can be produced, for example, by a method including a step of mixing the compound (a) and the compound (b), and is preferably produced by a method including a step of pulverizing and mixing the compound (a) and the compound (b) from the viewpoint of, for example, being able to easily obtain a solid electrolyte having a higher ion conductivity when a solid electrolyte is obtained from the present material.

In addition, when the compound (a) and the compound (b) are pulverized and mixed, these are preferably pulverized and mixed such that the present material obtained is made amorphous by a mechanochemical reaction and/or such that the average particle size of the present material is in the above range.

Examples of the method for mixing the compound (a) and the compound (b) include a mixing method using, for example, a roll tumbling mill, a ball mill, a small diameter ball mill (bead mill), a medium stirring mill, an air flow pulverizer, a mortar, an automatic kneading mortar, a tank crusher, or a jet mill. Among these, a pulverizing and mixing method using a ball mill or a bead mill is preferable, and a pulverizing and mixing method using a ball mill using a ball having a diameter of 0.1 to 10 mm is more preferable, from the viewpoint of, for example, being able to easily obtain a solid electrolyte exhibiting a higher ion conductivity when a solid electrolyte is obtained from the present material.

For the mixing ratio of the compound (a) and the compound (b), these may be preferably mixed in amounts such that the content of the compound (b) is in the above range.

The time of the pulverization and mixing is preferably 1 to 12 hours and more preferably 2 to 12 hours, from the viewpoint of, for example, being able to uniformly pulverize and mix the compound (a) and the compound (b) and being able to easily obtain the present material that is amorphous, and has an average particle size (D50) in the above range.

In the pulverization and mixing, the pulverization and mixing may be carried out while carrying out heating if necessary, and the pulverization and mixing is usually carried out at room temperature.

In addition, the pulverization and mixing may be carried out in the atmosphere, and is preferably carried out in an atmosphere of nitrogen gas and/or argon gas in which the oxygen gas content is adjusted in the range of 0 to 20% by volume.

### <<Solid electrolyte>>

The solid electrolyte according to one embodiment of the present invention (hereinafter, also referred to as "the present electrolyte") is obtained by using the present material and is preferably a sintered body of the present material obtained by firing the present material.

The present electrolyte preferably has a monoclinic structure. Whether the solid electrolyte has a monoclinic structure can be determined, for example, by Rietveld analysis of an X-ray diffraction (XRD) pattern of the solid electrolyte, specifically by the method of the following Examples.

The monoclinic ratio (= crystal quantity of monoclinic crystal × 100/total crystal quantity of confirmed crystals) of the present electrolyte is preferably 70% or more, more preferably 80% or more, and further preferably 90% or more, and the upper limit thereof is not particularly limited and is 100%.

When the monoclinic ratio of the present electrolyte is in the above range, the present electrolyte tends to be a solid electrolyte having a high ion conductivity both within a crystal grain and at a grain boundary.

The relative density of the present electrolyte is preferably 60 to 100% and more preferably 80 to 100%, from the viewpoint of, for example, being able to easily obtain a solid electrolyte having a higher ion conductivity.

Specifically, the relative density is measured by the following method.

The mass of the manufactured solid electrolyte is measured using an electronic balance. Next, the volume is measured from the actual size of the solid electrolyte using a micrometer. By dividing the measured mass by the volume, the density (measured value) of the solid electrolyte is calculated, and the relative density (%) can be determined from the ratio between the theoretical value of the density of the solid electrolyte and the above measured value.

Specifically, the theoretical density of the solid electrolyte is calculated by weight averaging using the theoretical density of each of crystal structures constituting the solid electrolyte and the content of each of the crystal structures. For example, when the solid electrolyte has a crystal structure 1 having a content of h% and a crystal structure 2 having a content of k%, the theoretical density of the solid electrolyte can be calculated by (theoretical density of crystal structure 1 × h + theoretical density of crystal structure 2 × k)/100.

The content of each crystal structure can be determined by Rietveld analysis.

The total ion conductivity of the sintered body of the present material obtained by firing the present material at 850°C or more and 900°C or less is preferably 2.00 × 10⁻⁴ S·cm⁻¹ or more and more preferably 3.00 × 10⁻⁴ S·cm⁻¹ or more.

The total ion conductivity of the sintered body of the present material obtained by firing the present material at 750°C or more and less than 850°C is preferably 2.00 × 10⁻⁵ S·cm⁻¹ or more and more preferably 4.00 × 10⁻⁵ S·cm⁻¹ or more.

The total ion conductivity of the sintered body of the present material obtained by firing the present material at 700°C or more and less than 750°C is preferably 1.00 × 10⁻⁵ S·cm⁻¹ or more and more preferably 2.00 × 10⁻⁵ S·cm⁻¹ or more.

The total ion conductivity of the sintered body of the present material obtained by firing the present material at 650°C or more and less than 700°C is preferably 1.00 × 10⁻⁶ S·cm⁻¹ or more and more preferably 2.00 × 10⁻⁶ S·cm⁻¹ or more.

When the total ion conductivity is in the above range, it can be deemed that the sintered body obtained by firing the present material at a low temperature has a sufficient ion conductivity.

Specifically, the total ion conductivity can be measured by the method described in the following Examples.

### <<Method for producing solid electrolyte>>

The method for producing a solid electrolyte according to one embodiment of the present invention (method for producing the present electrolyte) preferably includes a step A of firing the present material, and is more preferably a method for molding the present material and then firing the resulting material to obtain a sintered body.

The firing temperature in the step A is preferably 500 to 900°C, more preferably 600 to 900°C, and further preferably 650 to 900°C.

Because the present material is used, a sintered body having a sufficient ion conductivity can be obtained even when the present material is fired at such a low temperature.

The firing time in the step A depends on the firing temperature, and is preferably 12 to 144 hours and more preferably 48 to 96 hours.

When the firing time is in the above range, a sintered body having a sufficient ion conductivity can be obtained even when the present material is fired at such a low temperature.

The firing in the step A may be carried out in the atmosphere, and is preferably carried out in an atmosphere of nitrogen gas and/or argon gas in which the oxygen gas content is adjusted in the range of 0 to 20% by volume.

In addition, the firing in the step A may be carried out in a reducing gas atmosphere such as a nitrogen-hydrogen mixed gas including a reducing gas such as hydrogen gas. The ratio of hydrogen gas included in the nitrogen-hydrogen mixed gas is, for example, 1 to 10% by volume. As the reducing gas other than hydrogen gas, for example, ammonia gas, or carbon monoxide gas may be used.

In the step A, it is preferable to fire a molded body obtained by molding the present material and it is more preferable to fire a molded body obtained by press molding the present material, from the viewpoint of, for example, being able to easily obtain a solid electrolyte (sintered body) having a higher ion conductivity.

The pressure when press molding the present material is not particularly limited, and is preferably 50 to 500 MPa and more preferably 100 to 400 MPa.

The shape of the molded body obtained by press molding the present material is not particularly limited, either, and is preferably a shape dependent on the intended use of the sintered body (solid electrolyte) obtained by firing the molded body.

The method for producing a solid electrolyte according to one embodiment of the present invention (method for producing the present electrolyte) includes:
a step 1 of pulverizing and mixing a lithium ion conductive compound (a) including lithium, tantalum, phosphorus, and
oxygen as constituent elements, and at least one compound (b) selected from a boron compound, a bismuth compound, and a phosphorus compound [wherein the compound (b) is a compound different from the compound (a)], to manufacture an amorphous solid electrolyte material; and
a step 2 of firing the solid electrolyte material obtained in the step 1.

In particular, when both the lithium ion conductive compound (a) and the compound (b) are crystalline, a solid electrolyte having a high ion conductivity can be easily obtained by pulverizing and mixing at least two of the compounds that are crystalline to form an amorphous material once by a mechanochemical reaction, and firing the amorphous material.

Examples of the lithium ion conductive compound (a) including lithium, tantalum, phosphorus, and oxygen as constituent elements include the same compounds as for the compound (a) mentioned in the column of the solid electrolyte material, and examples of the compound (b) include the same compounds as for the compound (b) mentioned in the column of the solid electrolyte material.

Examples of the step 1 include the same step as the step mentioned in the column of the method for producing the present material, and examples of the step 2 include the same step as the step A.

When producing the present electrolyte, other components other than the present material may be used. Examples of the other components include a conventionally known material used for a solid electrolyte of an all-solid-state battery, and examples of, for example, a lithium ion conductive compound include a lithium ion conductive material having a structure such as NASICON type one or LISICON type one.

As each of the other components, one may be used, or two or more may be used.

The amount of the other components used is preferably 50% by mass or less and more preferably 30% by mass or less per 100% by mass in total of the other components and the present material, and the other components are preferably not used.

### <<All-solid-state battery>>

The all-solid-state battery according to one embodiment of the present invention (hereinafter, also referred to as "the present battery") includes a positive electrode having a positive electrode active material, a negative electrode having a negative electrode active material, and a solid electrolyte layer between the positive electrode and the negative electrode, wherein the solid electrolyte layer includes the present electrolyte.

The present battery may be a primary battery or a secondary battery, and is preferably a secondary battery and more preferably a lithium ion secondary battery, from the viewpoint of, for example, exerting the advantageous effects of the present invention more.

The structure of the present battery is not particularly limited as long as the present battery include a positive electrode, a negative electrode, and a solid electrolyte layer between the positive electrode and the negative electrode, and may be a so-called thin film type, laminated type, or bulk type.

### <Solid electrolyte layer>

The solid electrolyte layer is not particularly limited as long as the solid electrolyte layer includes the present electrolyte, and if necessary, may include a conventionally known additive used for the solid electrolyte layer of the all-solid-state battery, and the solid electrolyte layer preferably consists of the present electrolyte.

The thickness of the solid electrolyte layer may be appropriately selected according to the structure (for example thin film type) of the battery to be formed, and is preferably 50 nm to 1000 µm and more preferably 100 nm to 100 µm.

### <Positive electrode>

The positive electrode is not particularly limited as long as the positive electrode has a positive electrode active material, and preferable examples thereof include a positive electrode having a positive electrode current collector and a positive electrode active material layer.

### [Positive electrode active material layer]

The positive electrode active material layer is not particularly limited as long as the positive electrode active material layer includes a positive electrode active material, and the positive electrode active material layer preferably includes a positive electrode active material and a solid electrolyte and may further include an additive such as an electrically conductive aid or a sintering aid.

The thickness of the positive electrode active material layer may be appropriately selected according to the structure (for example thin film type) of the battery to be formed, and is preferably 10 to 200 pm, more preferably 30 to 150 pm, and further preferably 50 to 100 µm.

### • Positive electrode active material

Examples of the positive electrode active material include LiCo oxide, LiNiCo oxide, LiNiCoMn oxide, LiNiMn oxide, LiMn oxide, LiMn spinel, LiMnNi oxide, LiMnAl oxide, LiMnMg oxide, LiMnCo oxide, LiMnFe oxide, LiMnZn oxide, LiCrNiMn oxide, LiCrMn oxide, lithium titanate, metal lithium phosphate, a transition metal oxide, titanium sulfide, graphite, hard carbon, a transition metal-containing lithium nitride, silicon oxide, lithium silicate, lithium metal, a lithium alloy, a Li-containing solid solution, and a lithium-storing intermetallic compound.

Among these, LiNiCoMn oxide, LiNiCo oxide, and LiCo oxide are preferable, and LiNiCoMn oxide is more preferable, from the viewpoint of, for example, having a good affinity with a solid electrolyte, having an excellent balance of macroscopic electrical conductivity, microscopic electrical conductivity, and ion conductivity, having a high average potential, and being able to increase the energy density or battery capacity in the balance between specific capacity and stability.

In addition, the surface of the positive electrode active material may be coated with, for example, an ion conductive oxide such as lithium niobate, lithium phosphate, or lithium borate.

As the positive electrode active material used for the positive electrode active material layer, one may be used or two or more may be used.

Preferable examples of the positive electrode active material also include LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti], Li₂M6P₂O₇ [where M6 is one or more elements selected from the group consisting of Fe, Mn, Co, Ni, Al, Ti, and V, or two elements V and OJ, LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₄)₃ [where 0 ≤ x8 ≤ 0.8, and M8 is one or more elements selected from the group consisting of Ti and Ge], LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂.

The positive electrode active material is preferably in the form of a particle. The 50% diameter in the volume-based particle size distribution thereof is preferably 0.1 to 30 pm, more preferably 0.3 to 20 pm, further preferably 0.4 to 10 pm, and particularly preferably 0.5 to 3 µm.

In addition, the ratio of the length of the major axis to the length of the minor axis (length of the major axis/length of the minor axis), that is, the aspect ratio, of the positive electrode active material is preferably less than 3 and more preferably less than 2.

The positive electrode active material may form a secondary particle. In that case, the 50% diameter in the number-based particle size distribution of the primary particle is preferably 0.1 to 20 pm, more preferably 0.3 to 15 pm, further preferably 0.4 to 10 pm, and particularly preferably 0.5 to 2 µm.

The content of the positive electrode active material in the positive electrode active material layer is preferably 20 to 80% by volume and more preferably 30 to 70% by volume.

When the content of the positive electrode active material is in the above range, the positive electrode active material functions favorably, and a battery having a high energy density tends to be able to be easily obtained.

### • Solid electrolyte

The solid electrolyte that can be used for the positive electrode active material layer is not particularly limited, and a conventionally known solid electrolyte can be used, and the present electrolyte is preferably used from the viewpoint of, for example, exerting the advantageous effects of the present invention more.

As the solid electrolyte used for the positive electrode active material layer, one may be used or two or more may be used.

### • Additives

Preferable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, the same compounds as for the compound (b) mentioned in the column of the solid electrolyte material are preferable.

As each additive used for the positive electrode active material layer, one may be used or two or more may be used.

### • Positive electrode current collector

The positive electrode current collector is not particularly limited as long as the material thereof is one that conducts an electron without causing an electrochemical reaction. Examples of the material of the positive electrode current collector include a simple substance of a metal such as copper, aluminum, or iron, an alloy including any of these metals, and an electrically conductive metal oxide such as antimony-doped tin oxide (ATO) or tin-doped indium oxide (ITO).

As the positive electrode current collector, a current collector obtained by providing an electrically conductive adhesive layer on the surface of an electric conductor can also be used. Examples of the electrically conductive adhesive layer include a layer including, for example, a granular electrically conductive material, or a fibrous electrically conductive material.

### <Negative electrode>

The negative electrode is not particularly limited as long as the negative electrode has a negative electrode active material, and preferable examples thereof include a negative electrode having a negative electrode current collector and a negative electrode active material layer.

### [Negative electrode active material layer]

The negative electrode active material layer is not particularly limited as long as the negative electrode active material layer includes a negative electrode active material, and the negative electrode active material layer preferably includes a negative electrode active material and a solid electrolyte and may further include an additive such as an electrically conductive aid or a sintering aid.

The thickness of the negative electrode active material layer may be appropriately selected according to the structure (for example thin film type) of the battery to be formed, and is preferably 10 to 200 pm, more preferably 30 to 150 pm, and further preferably 50 to 100 pm.

### • Negative electrode active material

Examples of the negative electrode active material include a lithium alloy, a metal oxide, graphite, hard carbon, soft carbon, silicon, a silicon alloy, silicon oxide SiOₙ (0 < n ≤ 2), a silicon/carbon composite material, a composite material including a silicon domain within a pore of porous carbon, lithium titanate, and graphite coated with lithium titanate.

Among these, a silicon/carbon composite material and a composite material including a silicon domain in a pore of porous carbon are preferable because these have a high specific capacity and can increase the energy density and the battery capacity. A composite material including a silicon domain in a pore of porous carbon is more preferable, has excellent alleviation of volume expansion associated with lithium storage/release by silicon, and can maintain the balance of macroscopic electrical conductivity, microscopic electrical conductivity, and ion conductivity well. A composite material including a silicon domain in a pore of porous carbon in which the silicon domain is amorphous, the size of the silicon domain is 10 nm or less, and the pore derived from the porous carbon is present in the vicinity of the silicon domain is particularly preferable.

Preferable examples of the negative electrode active material also include LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti], Li₂M6P₂O₇ [where M6 is one or more elements selected from the group consisting of Fe, Mn, Co, Ni, Al, Ti, and V, or two elements V and OJ, LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₄)₃ [where 0 ≤ x8 ≤ 0.8, and M8 is one or more elements selected from the group consisting of Ti and Ge], (Li_{3-a9x9+(5-b9)y9}M9ₓ₉) (V_{1-y9}M10_{y9})O₄ [where M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10], LiNb₂O₇, Li₄Ti₅O₁₂, Li₄Ti₅PO₁₂, TiO₂, LiSi, and graphite.

The negative electrode active material is preferably in the form of a particle. The 50% diameter in the volume-based particle size distribution thereof, the aspect ratio, and the 50% diameter in the number-based particle size distribution of a primary particle when the negative electrode active material forms a secondary particle are preferably in the same ranges as for the positive electrode active material.

The content of the negative electrode active material in the negative electrode active material layer is preferably 20 to 80% by volume and more preferably 30 to 70% by volume.

When the content of the negative electrode active material is in the above range, the negative electrode active material functions favorably, and a battery having a high energy density tends to be able to be easily obtained.

### • Solid electrolyte

The solid electrolyte that can be used for the negative electrode active material layer is not particularly limited, and a conventionally known solid electrolyte can be used, and the present electrolyte is preferably used from the viewpoint of, for example, exerting the advantageous effects of the present invention more.

As the solid electrolyte used for the negative electrode active material layer, one may be used or two or more may be used.

### • Additives

Preferable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, the same compounds as for the compound (b) mentioned in the column of the solid electrolyte material are preferable.

As each additive used for the negative electrode active material layer, one may be used or two or more may be used.

### • Negative electrode current collector

As the negative electrode current collector, the same current collector as for the positive electrode current collector can be used.

### <Method for producing all-solid-state battery>

The all-solid-state battery can be formed, for example, by a known powder molding method. For example, the positive electrode current collector, a powder for the positive electrode active material layer, a powder for the solid electrolyte layer, a powder for the negative electrode active material layer, and the negative electrode current collector are stacked in this order, these are powder molded at the same time, and thereby formation of each layer of the positive electrode active material layer, the solid electrolyte layer, and the negative electrode active material layer, and connection between any adjacent two of the positive electrode current collector, the positive electrode active material layer, the solid electrolyte layer, the negative electrode active material layer, and the negative electrode current collector can be carried out at the same time.

When carrying out this powder molding, it is preferable to carry out firing at the same temperature as the firing temperature in the step A while applying a pressure comparable to the pressure when press molding the present material in the step A.

According to one embodiment of the present invention, even if the firing temperature when manufacturing the all-solid-state battery is low, an all-solid-state battery exhibiting a sufficient ion conductivity can be obtained, and thus it is possible to manufacture an all-solid-state battery with excellent economic efficiency and equipment saving while suppressing, for example, decomposition, and alteration in quality of another material such as a positive electrode or negative electrode material.

Each layer of the positive electrode active material layer, the solid electrolyte layer, and the negative electrode active material layer may be powder molded, and when an all-solid-state battery is manufactured using each of the obtained layers, each of the layers is preferably pressed to carry out firing.

In addition, the all-solid-state battery can also be manufactured, for example, by the following method.

For example a solvent, and/or a resin are(is) appropriately mixed into a material for positive electrode active material layer formation, a material for solid electrolyte layer formation, and a material for negative electrode active material layer formation to prepare pastes for formation of the layers, respectively, and the pastes are applied onto base sheets, respectively, and dried to manufacture a green sheet for the positive electrode active material layer, a green sheet for the solid electrolyte layer, and a green sheet for the negative electrode active material layer. Next, the green sheet for the positive electrode active material layer, the green sheet for the solid electrolyte layer, and the green sheet for the negative electrode active material layer from each of which the base sheet is peeled off are sequentially laminated, thermocompression bonded at a predetermined pressure, and then enclosed in a container and pressurized by, for example, hot isostatic pressing, cold isostatic pressing, or isostatic pressing to manufacture a laminated structure.

After that, if necessary, the laminated structure is subjected to degreasing treatment at a predetermined temperature and then to firing treatment to manufacture a laminated sintered body.

The firing temperature in this firing treatment is preferably the same as the firing temperature in the step A.

Next, if necessary, an all-solid-state battery can also be manufactured by forming a positive electrode current collector and a negative electrode current collector on both principal surfaces of the laminated sintered body by, for example, a sputtering method, a vacuum vapor deposition method, or application or dipping of a metal paste.

### Examples

Hereinafter, the present invention will be specifically described based on Examples. The present invention is not limited to these Examples.

### <Powder X-ray diffraction (XRD)>

Using a powder X-ray diffraction analyzer, PANalytical MPD (manufactured by Spectris Co., Ltd.), X-ray diffraction measurement of the powder and solid electrolyte materials obtained in the following Synthesis Examples (Cu-Ka radiation (output: 45 kV, 40 mA), diffraction angle 2θ = range of 10 to 50°, step width: 0.013°, incident side Sollerslit: 0.04 rad, incident side Anti-scatter slit: 2°, light receiving side Sollerslit: 0.04 rad, light receiving side Anti-scatter slit: 5 mm) was carried out to obtain X-ray diffraction (XRD) patterns. The crystal structures were confirmed by carrying out Rietveld analysis of the obtained XRD patterns using the known analysis software RIETAN-FP (available on creator; Fujio Izumi's website "RIETAN-FP/VENUS system distribution file" (http://fujioizumi.verse.jp/download/download.html)).

### [Synthesis Example 1] Synthesis of LiTa₂PO₈

Lithium carbonate (Li₂CO₃) (manufactured by Sigma-Aldrich, Inc., purity of 99.0% or more), tantalum pentoxide (Ta₂O₅) (FUJIFILM Wako Pure Chemical Corporation, purity of 99.9%), and diammonium hydrogen phosphate ((NH₄)₂HPO₄) (manufactured by Sigma-Aldrich, Inc., purity of 98% or more) were weighed such that the ratio of the numbers of atoms of lithium, tantalum, and phosphorus (Li:Ta:P) was 1.10:2.00:1.06. An appropriate amount of toluene was added to the raw material powders thereof weighed, and these were pulverized and mixed for 2 hours using a zirconia ball mill (zirconia ball: diameter of 1 mm).

The obtained mixture was placed in an alumina boat, and the temperature thereof was raised to 1000°C under a condition of a temperature rise rate of 10°C/min in an atmosphere of air (flow rate: 100 mL/min) using a rotary firing furnace (manufactured by Motoyama Co., Ltd.), and the mixture was fired at 1000°C for 4 hours to obtain a primary fired product.

The obtained primary fired product was pulverized and mixed in an agate mortar for 15 minutes, the obtained mixture was placed in an alumina boat, and the temperature thereof was raised to 1000°C under a condition of a temperature rise rate of 10°C/min in an atmosphere of air (flow rate: 100 mL/min) using a rotary firing furnace (manufactured by Motoyama Co., Ltd.), and the mixture was fired at 1000°C for 1 hour to obtain a secondary fired product (LiTa₂PO₈).

The temperature of the obtained secondary fired product was lowered to room temperature, then taken out from the rotary firing furnace, transferred into a dehumidified nitrogen gas atmosphere, and stored.

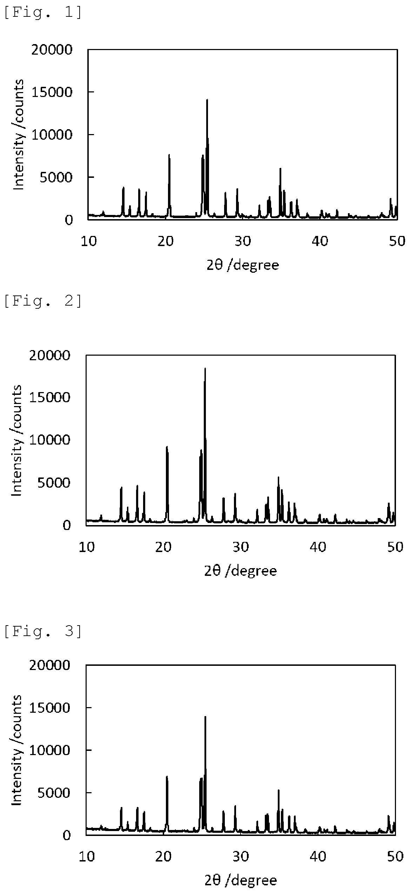

An XRD pattern of the obtained secondary fired product is shown in Figure 1. From this XRD pattern, only a diffraction pattern of a monoclinic crystal that was almost the same as that of LiTa₂PO₈ was observed in the obtained secondary fired product, and the monoclinic ratio (= crystal quantity of monoclinic crystal × 100/total crystal quantity of confirmed crystals) was 100%.

### [Synthesis Example 2] Synthesis of Si-containing LTPO (Li_{1.2}Ta₂P_{0.8}Si_{0.2}O₈)

A secondary fired product (abbreviated as Si-containing LTPO) was obtained by manufacturing in the same manner as in Synthesis Example 1 except that lithium carbonate (Li₂CO₃) (manufactured by Sigma-Aldrich, Inc., purity of 99.0% or more), tantalum pentoxide (Ta₂O₅) (FUJIFILM Wako Pure Chemical Corporation, purity of 99.9%), diammonium hydrogen phosphate ((NH₄)₂HPO₄) (manufactured by Sigma-Aldrich, Inc., purity of 98% or more), and silicon oxide (SiO₂) (manufactured by FUJIFILM Wako Pure Chemical Corporation, purity of 99.9%) were weighed such that the ratio of the numbers of atoms of lithium, tantalum, phosphorus, and silicon (Li:Ta:P:Si) was 1.38:2.00:0.85:0.20.

An XRD pattern of the obtained secondary fired product is shown in Figure 2. From this XRD pattern, the obtained secondary fired product was a crystal having a monoclinic ratio of 100%.

### [Synthesis Example 3] Synthesis of Nb-containing LTPO (LiTa_{1.8}Nb_{0.2}PO₈)

A secondary fired product (abbreviated as Nb-containing LTPO) was obtained by manufacturing in the same manner as in Synthesis Example 1 except that lithium carbonate (Li₂CO₃) (manufactured by Sigma-Aldrich, Inc., purity of 99.0% or more), tantalum pentoxide (Ta₂O₅) (FUJIFILM Wako Pure Chemical Corporation, purity of 99.9%), diammonium hydrogen phosphate ((NH₄)₂HPO₄) (manufactured by Sigma-Aldrich, Inc., purity of 98% or more), and niobium pentoxide (Nb₂O₅) (manufactured by FUJIFILM Wako Pure Chemical Corporation, purity of 99.9%) were weighed such that the ratio of the numbers of atoms of lithium, tantalum, phosphorus, and niobium (Li:Ta:P:Nb) was 1.10:1.80:1.06:0.20.

An XRD pattern of the obtained secondary fired product is shown in Figure 3. From this XRD pattern, the obtained secondary fired product was a crystal having a monoclinic ratio of 100%.

### [Synthesis Example 4] Synthesis of Li₃BO₃

Lithium hydroxide monohydrate (LiOH•H₂O) (manufactured by FUJIFILM Wako Pure Chemical Corporation, purity of 98.0% or more) and boric acid (H₃BO₃) (manufactured by FUJIFILM Wako Pure Chemical Corporation, purity of 99.5% or more) were weighed such that the ratio of the numbers of atoms of lithium and boron (Li:B) was 3.00:1.00. The raw material powders thereof weighed were pulverized and mixed in an agate mortar for 15 minutes to obtain a mixture.

The obtained mixture was placed in an alumina boat, and the temperature thereof was raised to 500°C under a condition of a temperature rise rate of 10°C/min in an atmosphere of air (flow rate: 100 mL/min) using a rotary firing furnace (manufactured by Motoyama Co., Ltd.), and the mixture was fired at 500°C for 2 hours to obtain a primary fired product.

The obtained primary fired product was pulverized and mixed in an agate mortar for 15 minutes, the obtained mixture was placed in an alumina boat, and the temperature thereof was raised to 630°C under a condition of a temperature rise rate of 10°C/min in an atmosphere of air (flow rate: 100 mL/min) using a rotary firing furnace (manufactured by Motoyama Co., Ltd.), and the mixture was fired at 630°C for 24 hours to obtain a secondary fired product (Li₃BO₃).

The temperature of the obtained secondary fired product was lowered to room temperature, then taken out from the rotary firing furnace, transferred into a dehumidified nitrogen gas atmosphere, and stored.

From an XRD pattern of the obtained secondary fired product, it was found that the obtained secondary fired product was crystalline.

### [Synthesis Example 5] Synthesis of Li₄B₂O₅

A secondary fired product (Li₄B₂O₅) was obtained by manufacturing in the same manner as in Synthesis Example 4 except that lithium hydroxide monohydrate (LiOH•H₂O) (manufactured by FUJIFILM Wako Pure Chemical Corporation, purity of 98.0% or more) and boric acid (H₃BO₃) (manufactured by FUJIFILM Wako Pure Chemical Corporation, purity of 99.5% or more) were weighed such that the ratio of the numbers of atoms of lithium and boron (Li:B) was 2.00:1.00.

From an XRD pattern of the obtained secondary fired product, it was found that the obtained secondary fired product was crystalline.

### [Synthesis Example 6] Synthesis of Li_{3.6}B₂O_{4.8}

A secondary fired product (Li_{3.6}B₂O_{4.8}) was obtained by manufacturing in the same manner as in Synthesis Example 4 except that lithium hydroxide monohydrate (LiOH•H₂O) (manufactured by FUJIFILM Wako Pure Chemical Corporation, purity of 98.0% or more) and boric acid (H₃BO₃) (manufactured by FUJIFILM Wako Pure Chemical Corporation, purity of 99.5% or more) were weighed such that the ratio of the numbers of atoms of lithium and boron (Li:B) was 1.80:1.00.

From an XRD pattern of the obtained secondary fired product, it was found that the obtained secondary fired product was crystalline.

### [Synthesis Example 7] Synthesis of Li_{3.2}B₂O_{4.6}

A secondary fired product (Li_{3.2}B₂O_{4.6}) was obtained by manufacturing in the same manner as in Synthesis Example 4 except that lithium hydroxide monohydrate (LiOH•H₂O) (manufactured by FUJIFILM Wako Pure Chemical Corporation, purity of 98.0% or more) and boric acid (H₃BO₃) (manufactured by FUJIFILM Wako Pure Chemical Corporation, purity of 99.5% or more) were weighed such that the ratio of the numbers of atoms of lithium and boron (Li:B) was 1.60:1.00.

From an XRD pattern of the obtained secondary fired product, it was found that the obtained secondary fired product was crystalline.

### [Synthesis Example 8] Synthesis of Li_{3.6}B_{1.6}C_{0.4}O₅

Lithium hydroxide monohydrate (LiOH•H₂O) (manufactured by FUJIFILM Wako Pure Chemical Corporation, purity of 98.0% or more), boric acid (H₃BO₃) (manufactured by FUJIFILM Wako Pure Chemical Corporation, purity of 99.5% or more), and lithium carbonate (Li₂CO₃) (manufactured by Sigma-Aldrich, Inc., purity 99.0% or more) were weighed such that the ratio of the numbers of atoms of lithium, boron, and carbon (Li:B:C) was 3.6:1.6:0.4. The raw material powders thereof weighed were pulverized and mixed in an agate mortar for 15 minutes to obtain a mixture.

A secondary fired product (Li_{3.6}B_{1.6}C_{0.4}O₅) was obtained by manufacturing in the same manner as in Synthesis Example 4 from the obtained mixture.

From an XRD pattern of the obtained fired product, it was found that the obtained fired product was crystalline.

### [Synthesis Example 9] Synthesis of LiPO₃

Lithium carbonate (Li₂CO₃) (manufactured by Sigma-Aldrich, Inc., purity of 99.0% or more) and diammonium hydrogen phosphate ((NH₄)₂HPO₄) (manufactured by Sigma-Aldrich, Inc., purity of 98% or more) were weighed such that the ratio of the numbers of atoms of lithium and phosphorus (Li:P) was 1:1. The raw material powders thereof weighed were pulverized and mixed in an agate mortar for 15 minutes to obtain a mixture.

The obtained mixture was placed in an alumina boat, and the temperature thereof was raised to 600°C under a condition of a temperature rise rate of 10°C/min in an atmosphere of air (flow rate: 100 mL/min) using a rotary firing furnace (manufactured by Motoyama Co., Ltd.), and the mixture was fired at 600°C for 3 hours to obtain a fired product (LiPO₃).

The temperature of the obtained fired product was lowered to room temperature, then taken out from the rotary firing furnace, transferred into a dehumidified nitrogen gas atmosphere, and stored.

From an XRD pattern of the obtained fired product, it was found that the obtained fired product was crystalline.

### [Synthesis Example 10] Synthesis of LiBiO₂

Lithium hydroxide monohydrate (LiOH•H₂O) (manufactured by FUJIFILM Wako Pure Chemical Corporation, purity of 98.0% or more) and bismuth oxide (manufactured by FUJIFILM Wako Pure Chemical Corporation, purity of 99.9%) were weighed such that the ratio of the numbers of atoms of lithium and bismuth (Li:Bi) was 1:1. The raw material powders thereof weighed were pulverized and mixed in an agate mortar for 15 minutes to obtain a mixture.

The obtained mixture was placed in an alumina boat, and the temperature thereof was raised to 600°C under a condition of a temperature rise rate of 10°C/min in an atmosphere of air (flow rate: 100 mL/min) using a rotary firing furnace (manufactured by Motoyama Co., Ltd.), and the mixture was fired at 600°C for 4 hours to obtain a fired product (LiBiO₂).

The temperature of the obtained fired product was lowered to room temperature, then taken out from the rotary firing furnace, transferred into a dehumidified nitrogen gas atmosphere, and stored.

From an XRD pattern of the obtained fired product, it was found that the obtained fired product was crystalline.

### [Synthesis Example 11] H₃BO₃

Commercially available boric acid (H₃BO₃) (manufactured by FUJIFILM Wako Pure Chemical Corporation, purity of 99.5% or more) was used as it was.

### [Example 1]

LiTa₂PO₈ obtained in Synthesis Example 1 and Li₃BO₃ obtained in Synthesis Example 4 were weighed such that the mole ratio (LiTa₂PO₈:Li₃BO₃) was 0.975:0.025. Each of the weighed compounds was placed in a zirconia ball mill, an appropriate amount of toluene was added thereto, and these were pulverized and mixed using a zirconia ball having a diameter of 1 mm for 2 hours to obtain a solid electrolyte material (mixture).

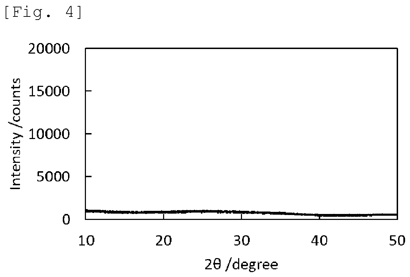

An XRD pattern of the obtained solid electrolyte material is shown in Figure 4. From this XRD pattern, it was found that the obtained solid electrolyte material was amorphous.

### <Manufacture of pellet>

Using a tableting machine, a pressure of 40 MPa was applied with a hydraulic press to the obtained solid electrolyte material to form a disk-shaped tableted body having a diameter of 10 mm and a thickness of 1 mm, and next, a pressure of 300 MPa was applied to the disk-shaped tableted body by CIP (cold isostatic pressing) to manufacture a pellet.

### <Manufacture of sintered body>

The obtained pellet was placed in an alumina boat, and the temperature thereof was raised to 850°C under a condition of a temperature rise rate of 10°C/min in an atmosphere of air (flow rate: 100 mL/min) using a rotary firing furnace (manufactured by Motoyama Co., Ltd.), and the pellet was fired at the above temperature for 96 hours to obtain a sintered body, which was a solid electrolyte.

The temperature of the obtained sintered body was lowered to room temperature, then taken out from the rotary firing furnace, transferred into a dehumidified nitrogen gas atmosphere, and stored.

### <Total conductivity>

A gold layer was formed on each of both sides of the obtained sintered body using a sputtering machine to obtain a measurement pellet for ion conductivity evaluation.

The obtained measurement pellet was kept in a constant temperature bath at 25°C for 2 hours before measurement. Next, AC impedance measurement was carried out at 25°C in a frequency range of 1 Hz to 10 MHz under a condition of an amplitude of 25 mV using an impedance analyzer (manufactured by Solartron Analytical, model number: 1260A). The obtained impedance spectrum was fitted with an equivalent circuit using the equivalent circuit analysis software ZView included with the analyzer to determine the lithium ion conductivity within a crystal grain and the lithium ion conductivity at a crystal grain boundary, and these were added up to calculate the total conductivity. The result is shown in Table 1.

### [Examples 2 to 10 and Comparative Example 1]

Solid electrolyte materials were manufactured in the same manner as in Example 1 except that the compound (a) shown in Table 1 was used and the amount of Li₃BO₃ mixed and the firing temperature were changed as shown in Table 1, and next, the total conductivity of sintered bodies obtained by firing the obtained solid electrolyte materials at the firing temperatures shown in Table 1 was measured. Results are shown in Table 1.

The solid electrolyte materials obtained in Examples 2 to 10 were each amorphous as a result of XRD measurement.

**[Table 1]**

| | Compound (a) | Li₃BO₃ | Ratio of numbers of atoms (atomic %) | | | | | Total conductivity at each firing temperature (S•cm⁻¹) | | | |
|---|---|---|---|---|---|---|---|---|---|---|---|
| | | Amount mixed (mol%) | Li | B | Si | P | Ta | 850°C | 750°C | 700°C | 650°C |
| Example 1 | LiTa₂PO₈ | 2.5 | 8.8 | 0.2 | 0.0 | 8.2 | 16.4 | 2.68 × 10⁻⁴ | - | - | - |
| Example 2 | LiTa₂PO₈ | 5 | 9.4 | 0.4 | 0.0 | 8.1 | 16.2 | 4.66 × 10⁻⁴ | - | - | - |
| Example 3 | LiTa₂PO₈ | 10 | 10.4 | 0.9 | 0.0 | 7.8 | 15.7 | 1.15 × 10⁻³ | 1.52 × 10⁻⁴ | - | - |
| Example 4 | LiTa₂PO₈ | 20 | 12.7 | 1.8 | 0.0 | 7.3 | 14.5 | 9.46 × 10⁻⁴ | 1.88 × 10⁻⁴ | 1.32 × 10⁻⁴ | - |
| Example 5 | LiTa₂PO₈ | 30 | 15.2 | 2.9 | 0.0 | 6.7 | 13.3 | 6.29 × 10⁻⁴ | 1.07 × 10⁻⁴ | 5.33 × 10⁻⁵ | - |
| Example 6 | LiTa₂PO₈ | 40 | 18.0 | 4.0 | 0.0 | 6.0 | 12.0 | - | - | - | 2.72 × 10⁻⁶ |
| Example 7 | Si-containing LTPO | 2.5 | 10.3 | 0.2 | 1.6 | 6.5 | 16.2 | 3.62 × 10⁻⁴ | - | - | - |
| Example 8 | Si-containing LTPO | 5 | 10.8 | 0.4 | 1.6 | 6.4 | 15.9 | 4.27 × 10⁻⁴ | - | - | - |
| Example 9 | Si-containing LTPO | 10 | 11.8 | 0.9 | 1.5 | 6.2 | 15.4 | 4.17 × 10⁻⁴ | 2.13 × 10⁻⁴ | - | - |
| Example 10 | Si-containing LTPO | 20 | 14.0 | 1.8 | 1.4 | 5.7 | 14.3 | 3.00 × 10⁻⁴ | - | - | - |
| Comparative Example 1 | LiTa₂PO₈ | 0 | 8.3 | 0.0 | 0.0 | 8.3 | 16.7 | 1.87 × 10⁻⁴ | 6.67 × 10⁻⁷ | 3.85 × 10⁻⁷ | Out of lower limit of measurement |

From Table 1, it can be seen that the solid electrolyte materials including a lithium ion conductive compound (a) including lithium, tantalum, phosphorus, and oxygen as constituent elements and a boron compound (Li₃BO₃) as the compound (b) each allowed a sintered body having a sufficient ion conductivity to be obtained even when fired at a low temperature of 900°C or less.

### [Examples 11 to 19]

Solid electrolyte materials were manufactured in the same manner as in Example 1 except that the compound (a) shown in Table 2 was used, Li₄B₂O₅ was used as the compound (b), and the amount of Li₄B₂O₅ mixed and the firing temperature were changed as shown in Table 2, and next, the total conductivity of sintered bodies obtained by firing the obtained solid electrolyte materials at the firing temperatures shown in Table 2 was measured. Results are shown in Table 2.

The solid electrolyte materials obtained in Examples 11 to 19 were each amorphous as a result of XRD measurement.

**[Table 2]**

| | Compound (a) | Li₄B₂O₅ | Ratio of numbers of atoms (atomic %) | | | | | | Total conductivity at each firing temperature (S•cm⁻¹) | | | |
|---|---|---|---|---|---|---|---|---|---|---|---|---|
| | | Amount mixed (mol%) | Li | B | Si | P | Nb | Ta | 850°C | 750°C | 700°C | 650°C |
| Example 11 | LiTa₂PO₈ | 5 | 9.6 | 0.8 | 0.0 | 7.9 | 0.0 | 15.9 | 1.25 × 10⁻³ | 1.31 × 10⁻⁴ | 6.90 × 10⁻⁵ | - |
| Example 12 | LiTa₂PO₈ | 10 | 10.9 | 1.7 | 0.0 | 7.6 | 0.0 | 15.1 | 1.10 × 10⁻³ | 2.54 × 10⁻⁴ | 9.31 × 10⁻⁵ | - |
| Example 13 | LiTa₂PO₈ | 15 | 12.2 | 2.5 | 0.0 | 7.2 | 0.0 | 14.3 | 7.59 × 10⁻⁴ | 2.36 × 10⁻⁴ | 1.78 × 10⁻⁴ | 3.62 × 10⁻⁵ |
| Example 14 | LiTa₂PO₈ | 20 | 13.6 | 3.4 | 0.0 | 6.8 | 0.0 | 13.6 | - | - | 6.54 × 10⁻⁵ | 2.28 × 10⁻⁵ |
| Example 15 | Si-containing LTPO | 5 | 11.0 | 0.8 | 1.6 | 6.3 | 0.0 | 15.7 | - | 2.32 × 10⁻⁴ | - | - |
| Example 16 | Si-containing LTPO | 10 | 12.3 | 1.7 | 1.5 | 6.0 | 0.0 | 14.9 | - | 8.60 × 10⁻⁵ | 7.11 × 10⁻⁵ | - |
| Example 17 | Si-containing LTPO | 15 | 13.5 | 2.5 | 1.4 | 5.7 | 0.0 | 14.1 | - | - | 4.37 × 10⁻⁵ | - |
| Example 18 | Nb-containing LTPO | 5 | 9.6 | 0.8 | 0.0 | 7.9 | 1.6 | 14.3 | 1.14 × 10⁻³ | - | - | - |
| Example 19 | Nb-containing LTPO | 15 | 12.2 | 2.5 | 0.0 | 7.2 | 1.4 | 12.9 | 4.78 × 10⁻⁴ | - | 1.17 × 10⁻⁴ | - |
| Comparative Example 1 | LiTa₂PO₈ | 0 | 8.3 | 0.0 | 0.0 | 8.3 | 0.0 | 16.7 | 1.87 × 10⁻⁴ | 6.67 × 10⁻⁷ | 3.85 × 10⁻⁷ | Out of lower limit of measurement |

From Table 2, it can be seen that the solid electrolyte materials including a lithium ion conductive compound (a) including lithium, tantalum, phosphorus, and oxygen as constituent elements and a boron compound (Li₄B₂O₅) as the compound (b) each allowed a sintered body having a sufficient ion conductivity to be obtained even when fired at a low temperature of 900°C or less.

### [Examples 20 to 26]

Solid electrolyte materials were manufactured in the same manner as in Example 1 except that the compounds (a) and (b) shown in Table 3 were used and the amount of the compound (b) mixed and the firing temperature were changed as shown in Table 3, and next, the total conductivity of sintered bodies obtained by firing the obtained solid electrolyte materials at the firing temperatures shown in Table 3 was measured. Results are shown in Table 3.

The solid electrolyte materials obtained in Examples 20 to 26 were each amorphous as a result of XRD measurement.

**[Table 3]**

| | Compound (a) | Compound(b) | | Ratio of numbers of atoms (atomic %) | | | | | | Total conductivity at each firing temperature (S•cm⁻¹) | | | |
|---|---|---|---|---|---|---|---|---|---|---|---|---|---|
| | | Type | Amount mixed (mol%) | Li | B | Si | P | Ta | Bi | 850°C | 750°C | 700°C | 650°C |
| Example 20 | LiTa₂PO₈ | H₃BO₃ | 30 | 6.7 | 2.9 | 0.0 | 6.7 | 13.3 | 0.0 | 7.99 × 10⁻⁴ | - | 6.32 × 10⁻⁵ | - |
| Example 21 | LiTa₂PO₈ | Li_{3.6}B₂O_{4.8} | 15 | 11.8 | 2.6 | 0.0 | 7.2 | 14.5 | 0.0 | - | - | 1.36 × 10⁻⁴ | - |
| Example 22 | LiTa₂PO₈ | Li_{3.2}B₂O_{4.6} | 15 | 11.4 | 2.6 | 0.0 | 7.3 | 14.6 | 0.0 | - | - | 1.57 × 10⁻⁴ | - |
| Example 23 | LiTa₂PO₈ | Li_{3.6}B_{1.6}C_{0.4}O₅ | 15 | 11.8 | 2.0 | 0.0 | 7.2 | 14.4 | 0.0 | - | - | 1.27 × 10⁻⁴ | - |
| Example 24 | Si-containing LTPO | LiPO₃ | 10 | 10.3 | 0.0 | 1.6 | 7.1 | 15.7 | 0.0 | 4.39 × 10⁻⁴ | 4.63 × 10⁻⁵ | - | - |
| Example 25 | LiTa₂PO₈ | LiBiO₂ | 5 | 8.6 | 0.0 | 0.0 | 8.2 | 16.4 | 0.4 | 5.03 × 10⁻⁴ | - | - | - |
| Example 26 | Si-containing LTPO | LiBiO₂ | 5 | 10.1 | 0.0 | 1.6 | 6.4 | 16.1 | 0.4 | 3.56 × 10⁻⁴ | - | 3.57 × 10⁻⁵ | - |
| Comparative Example 1 | LiTa₂PO₈ | | 0 | 8.3 | 0.0 | 0.0 | 8.3 | 16.7 | 0.0 | 1.87 × 10⁻⁴ | 6.67 × 10⁻⁷ | 3.85 × 10⁻⁷ | Out of lower limit of measurement |

From Table 3, it can be seen that the solid electrolyte materials including a lithium ion conductive compound (a) including lithium, tantalum, phosphorus, and oxygen as constituent elements and at least one compound (b) selected from a boron compound, a bismuth compound, and a phosphorus compound each allowed a sintered body having a sufficient ion conductivity to be obtained even when fired at a low temperature of 900°C or less.

### Industrial Applicability

The solid electrolyte material according to one embodiment of the present invention can allow a sintered body having a sufficient ion conductivity to be obtained even when fired at a low temperature (e.g., 900°C or less), and the sintered body can be suitably used as a solid electrolyte of a lithium ion secondary battery.

## Claims

1. A solid electrolyte material comprising:
a lithium ion conductive compound (a) comprising lithium, tantalum, phosphorus, and oxygen as constituent elements; and
at least one compound (b) selected from a boron compound, a bismuth compound, and a phosphorus compound wherein the compound (b) is a compound different from the compound (a).

2. The solid electrolyte material according to claim 1, wherein the solid electrolyte material is amorphous.

3. The solid electrolyte material according to claim 1, wherein the compound (a) has a monoclinic structure.

4. The solid electrolyte material according to any one of claims 1 to 3, wherein
the compound (a) is
a compound represented by a composition formula Li [₁₊₍₅₋ₐ₎ₓ] Ta₂₋ₓM1ₓPO₈, or a compound represented by a composition formula Li [_{1+(5-b)y}] Ta₂P_{1-y}M2_{y}O₈, where
M1 is one or more elements selected from the group consisting of Nb, Zr, Ga, Sn, Hf, W, and Mo, 0.0 ≤ x < 1.0, and a is an average valence of M1, and
M2 is one or more elements selected from the group consisting of Si, Al, and Ge, and 0.0 ≤ y < 0.7, and b is an average valence of M2.

5. The solid electrolyte material according to any one of claims 1 to 4, wherein the compound (b) is a compound comprising lithium or hydrogen as a constituent element.

6. The solid electrolyte material according to any one of claims 1 to 5, wherein a content of the tantalum element is 10.6 to 16.6 atomic %.

7. The solid electrolyte material according to any one of claims 1 to 6, wherein a content of the phosphorus element is 5.3 to 8.3 atomic %.

8. The solid electrolyte material according to any one of claims 1 to 7, wherein a content of the lithium element is 5.0 to 20.0 atomic %.

9. The solid electrolyte material according to any one of claims 1 to 8, wherein
the boron compound is at least one compound selected from the group consisting of LiBO₂, LiB₃O₅, Li₂B₄O₇, Li₃B₁₁O₁₈, Li₃BO₃, Li₃B₇O₁₂, Li_{3.6}B₂O_{4.8}, Li_{3.2}B₂O_{4.6}, Li₄B₂O₅, Li₆B₄O₉, Li₃₋ₓ₅B₁₋ₓ₅Cₓ₅O₃, Li₄₋ₓ₆B₂-ₓ₆Cₓ₆O₅, Li_{2.4}Al_{0.2}BO₃, Li_{2.7}Al_{0.1}BO₃, B₂O₃, and H₃BO₃, 0 < x5 < 1, and 0 < x6 < 2.

10. The solid electrolyte material according to any one of claims 1 to 9, wherein the bismuth compound is at least one compound selected from the group consisting of LiBiO₂, Li₃BiO₃, Li₄Bi₂O₅, Li_{2.4}Al_{0.2}BiO₃, and Bi₂O₃.

11. The solid electrolyte material according to any one of claims 1 to 10, wherein the phosphorus compound is at least one compound selected from the group consisting of LiPO₃ and Li₃PO₄.

12. The solid electrolyte material according to any one of claims 1 to 11, wherein a content of the compound (b) is 1 to 40 mol% per 100 mol% in total of the compounds (a) and (b).

13. A method for producing the solid electrolyte material according to any one of claims 1 to 12, comprising a step of pulverizing and mixing the compound (a) and the compound (b).

14. A solid electrolyte obtained by using the solid electrolyte material according to any one of claims 1 to 12.

15. A solid electrolyte which is a sintered body of the solid electrolyte material according to any one of claims 1 to 12.

16. A method for producing the solid electrolyte according to claim 14 or 15, comprising a step of firing the solid electrolyte material according to any one of claims 1 to 12 at 500 to 900°C.

17. A method for producing a solid electrolyte, comprising:
a step 1 of pulverizing and mixing a lithium ion conductive compound (a) comprising lithium, tantalum, phosphorus, and oxygen as constituent elements, and at least one compound (b) selected from a boron compound, a bismuth compound, and a phosphorus compound wherein the compound (b) is a compound different from the compound (a), to manufacture an amorphous solid electrolyte material; and
a step 2 of firing the solid electrolyte material obtained in the step 1.

18. An all-solid-state battery, comprising:
a positive electrode having a positive electrode active material;
a negative electrode having a negative electrode active material; and
a solid electrolyte layer between the positive electrode and the negative electrode, wherein
the solid electrolyte layer comprises the solid electrolyte according to claim 14 or 15.

19. The all-solid-state battery according to claim 18, wherein
the positive electrode active material comprises one or more compounds selected from the group consisting of LiM3PO₄, LiM5VO₄, Li₂M6P₂O₇, LiVP₂O₇, Liₓ₇V_{y7}M7_{z7}, Li₁₊ₓ₈Alₓ₈M8₂₋ₓ₈ (PO₄)₃, LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂,
M3 is one or more elements selected from the group consisting of Mn, Co, Ni, Fe, Al, Ti, and V, or two elements V and O,
M5 is one or more elements selected from the group consisting of Fe, Mn, Co, Ni, Al, and Ti,
M6 is one or more elements selected from the group consisting of Fe, Mn, Co, Ni, Al, Ti, and V, or two elements V and O,
2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr, and
0 ≤ x8 ≤ 0.8, and M8 is one or more elements selected from the group consisting of Ti and Ge.

20. The all-solid-state battery according to claim 18 or 19, wherein
the negative electrode active material comprises one or more compounds selected from the group consisting of LiM3PO₄, LiM5VO₄, Li₂M6P₂O₇, LiVP₂O₇, Liₓ₇V_{y7}M7_{z7}, Li₁₊ₓ₈Alₓ₈M8₂₋ₓ₈(PO₄)₃, (Li_{3-a9x9+(5-b9)y9}M9ₓ₉) (V_{1-y9}M10_{y9})O₄, LiNb₂O₇, Li₄Ti₅O₁₂, Li₄Ti₅PO₁₂, TiO₂, LiSi, and graphite,
M3 is one or more elements selected from the group consisting of Mn, Co, Ni, Fe, Al, Ti, and V, or two elements V and O,
M5 is one or more elements selected from the group consisting of Fe, Mn, Co, Ni, Al, and Ti,
M6 is one or more elements selected from the group consisting of Fe, Mn, Co, Ni, Al, Ti, and V, or two elements V and O,
2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr,
0 ≤ x8 ≤ 0.8, and M8 is one or more elements selected from the group consisting of Ti and Ge, and
M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10.

21. The all-solid-state battery according to any one of claims 18 to 20, wherein the positive electrode and the negative electrode comprise the solid electrolyte according to claim 14 or 15.
